# EUROPÄISCHE PATENTSCHRIFT

(11) **EP 2 936 309 B1**
(45) Veröffentlichungstag und Bekanntmachung des Hinweises auf die Patenterteilung: **10.07.2019**
(21) Anmeldenummer: 13807990.0
(22) Anmeldetag: 16.12.2013
(51) Int. Cl.: G06F 9/48, G06F 21/64, G06F 3/0482

(54) **VERFAHREN, COMPUTERPROGRAMMPRODUKT UND GERÄTESYSTEM ZUM UMSCHALTEN VON ANWENDUNGSPROGRAMMEN**
METHOD, COMPUTER PROGRAM PRODUCT AND DEVICE SYSTEM FOR SWITCHING APPLICATION PROGRAMS
PROCÉDÉ, PRODUIT-PROGRAMME D'ORDINATEUR ET SYSTÈME D'APPAREILS DESTINÉS À LA COMMUTATION DE PROGRAMMES D'APPLICATION

(30) Priorität: 18.12.2012 DE 102012223641
(43) Veröffentlichungstag der Anmeldung: 28.10.2015
(73) Patentinhaber: Bayerische Motoren Werke Aktiengesellschaft, 80809 München (DE)
(72) Erfinder: BINNA, Manuel, 80336 München (DE); HÜBLER, Michael, 86453 Dasing (DE); NETZMANN, Andreas, 86922 Eresing (DE); SCHRÖPF, Tobias, 80636 München (DE)
(86) Internationale Anmeldenummer: PCT/EP2013/076634
(87) Internationale Veröffentlichungsnummer: WO 2014/095673

(56) Entgegenhaltungen:
- Chet Ramey ET AL: "Bash Reference Manual Reference Documentation for Bash Edition 4.2, for Bash Version 4.2. December 2010", , 1. Dezember 2010 (2010-12-01), XP055108031, Gefunden im Internet: URL:https://www.gnu.org/s/bash/manual/bash .pdf [gefunden am 2014-03-14]
- SCRIBNER D D ET AL: "GNUPG FREQUENTLY ASKED QUESTIONS", INTERNET CITATION, 30. Juni 2003 (2003-06-30), XP002286317, Gefunden im Internet: URL:http://www.gnupg.org/documentation/faq s.html [gefunden am 2004-06-24]
- Raja Bose ET AL: "Terminal mode", Proceedings of the 2nd International Conference on Automotive User Interfaces and Interactive Vehicular Applications, AutomotiveUI '10, 1 January 2010 (2010-01-01), page 148, XP055083625, New York, New York, USA DOI: 10.1145/1969773.1969801 ISBN: 978-1-45-030437-5

## Beschreibung

Die Erfindung betrifft ein Verfahren, ein Computerprogrammprodukt und ein Gerätesystem zum Umschalten von Anwendungsprogrammen. Die Erfindung betrifft insbesondere ein System, bei dem ein prozessorgesteuertes mobiles Endgerät mit einem in einem Fahrzeug integrierten prozessorgesteuerten Gerät verbunden ist. Dabei kann insbesondere auf dem Endgerät ein Anwendungsprogramm ausgeführt werden und mittels des fahrzeugintegrierten Geräts auf ein anderes Anwendungsprogramm umgeschaltet werden. Das Anwendungsprogramm kann insbesondere eine sogenannte App sein, die typischerweise in einem mobilen Smartphone-Gerät mit einer grafischen Benutzeroberfläche geladen und ausgeführt wird sowie einen aussagekräftigen Namen aufweisen kann. Apps stellen beispielsweise eine Verbindung zu Internet-Diensten oder zu sozialen Netzwerken her oder bieten sonstige Funktionen wie email-Funktionen oder Taschenrechnerfunktionen usw.

Smartphones können so gestaltet sein, dass zu einem bestimmten Zeitpunkt lediglich eine begrenzte Zahl an Apps, insbesondere nur eine App bzw. nur eine App einer bestimmten Kategorie, ausgeführt werden kann. Mehrere Apps können dem entsprechend nicht parallel ausgeführt werden. Dies hat zum Einen den Vorteil, dass der Smartphone-Prozessor neben den Betriebssystem-Programmen lediglich die eine App zu verarbeiten hat und somit die App schneller und zuverlässiger abgearbeitet wird als wenn eine Vielzahl von Apps gleichzeitig auf dem Smartphone ablaufen. Zum Anderen ist für den Benutzer des Smartphones die Bedienung wesentlich übersichtlicher und leichter, wenn jeweils nur eine App ausgeführt wird. Dies gilt insbesondere, wenn die Bildschirmfläche des Smartphones recht begrenzt ist und er sich deshalb nicht gleichzeitig über die aktuellen Laufzustände aller Apps einen ausreichenden Überblick verschaffen kann.

Wenn ein mobiles Endgerät wie ein Smartphone mit einem in ein Fahrzeug integriertes Gerät, z.B. an ein Infotainmentgerät, verbunden wird, dann besteht die Gefahr, dass der Fahrer des Fahrzeugs während der Fahrt durch ein Umschalten zwischen Apps abgelenkt wird. Diese Gefahr besteht insbesondere dann, wenn das Umschalten nur direkt am Endgerät erfolgen kann und zum Beispiel dessen Bildschirm und/oder Bedienungstasten relativ klein sind.

Das Dokument "Bash Reference Manual", Edition 4.2, for Bash Version 4.2, December 2010, beschreibt den Funktionsumfang der Bash-Shell des Computer-Betriebssystems GNU. Mittels der Bash-Shell lassen sich auf einem Computer unter GNU ablaufende Anwendungen starten und beenden; ferner kann zwischen den Anwendungen umgeschaltet werden. Zu jedem Zeitpunkt kann nur genau eine Anwendung die sogenannte Konsole zu Ein- und / oder Ausgabezwecken nutzen.

R. Bose, J. Brakensiek, K. Park: "Terminal Mode - Transforming Mobile Devices into Automotive Application Platforms", Proceedings of the Second International Conference on Automotive User Interfaces and Interactive Vehicular Applications, November 11-12 2010, schlägt ein Verfahren für die Datenübertragung zwischen einem Mobilgerät und einem Fahrzeug-Infotainmentsystem vor, bei dem auf dem Mobilgerät ausgeführte Apps über Bedienelemente des Fahrzeugs umgeschaltet und bedient werden können. In der US 2011/0138370 A1 ist ein Verfahren zum Austauschen von Daten zwischen Apps beschrieben.

Aus der US 2010/0146449 A1 ist im Zusammenhang mit einem Internetbrowser bekannt, für eine Bildschirmdarstellung mittels einer Umschalt-Anwendung, die gleichzeitig mehrere Auswahlmöglichkeiten anzeigt, zwischen verschiedenen Webseiten bzw. Anwendungen umzuschalten.

Die Inhalte der oben genannten Veröffentlichungen werden hiermit durch Bezugnahme in die vorliegende Beschreibung aufgenommen.

Es ist Aufgabe der Erfindung, in einem mobilen Multimedia-Endgerät, das mit einem zweiten Gerät, einem so genannten Multimedia-Dockinggerät, verbunden ist, das Umschalten zwischen zwei Anwendungsprogrammen in einfacher Weise zu ermöglichen, wenn das Umschalten mittels des Multimedia-Dockinggeräts erfolgt.

Diese Aufgabe wird durch die in den unabhängigen Patentansprüchen angegebene Erfindung gelöst. Vorteilhafte Ausführungsformen der Erfindung sind in den abhängigen Ansprüchen angegeben.

Erfindungsgemäß ist ein prozessorgesteuertes Multimedia-Endgerät vorgesehen, dass mit einem prozessorgesteuerten Multimedia-Dockinggerät verbunden ist. Auf dem Multimedia-Endgerät ist eine Gruppe mehrerer Anwendungsprogramme gespeichert, die zur Ausführung bereit gestellt werden. Auf dem Multimedia-Gerät können Anwendungsprogramme im Vordergrund und im Hintergrund ablaufen. Beim Ablaufen im Vordergrund kann ein Anwendungsprogramm Daten über eine grafische Benutzeroberfläche ausgeben. Im Vordergrund wird zu einem Zeitpunkt jeweils nur eines der Anwendungsprogramme aus der Gruppe ausgeführt. Beim Ablaufen im Hintergrund kann ein Anwendungsprogramm dagegen keine Daten über die grafische Benutzeroberfläche ausgeben. In dem Multimedia-Endgerät ist ein Speicherbereich vorgesehen, auf den die Anwendungsprogramme während ihrer Ausführung Lese-und Schreibzugriff haben. Zu den Anwendungsprogrammen wird jeweils ein anwendungsspezifischer Datensatz in dem Speicherbereich gespeichert, der auch nach dem Beenden des jeweiligen Anwendungsprogramms in dem Speicherbereich erhalten bleibt. Zum Umschalten von Anwendungsprogrammen in dem Multimedia-Endgerät ist vorgesehen, dass ein erstes Anwendungsprogramm während seiner Ausführung in dem Multimedia-Endgerät die anwendungsspezifischen Datensätze der anderen Anwendungsprogramme der Gruppe liest und in einer Liste speichert. Die Liste wird an das Multimedia-Dockinggerät übertragen. Auf dem Multimedia-Dockinggerät werden Daten zu den in der Liste enthaltenen Anwendungsprogrammen angezeigt. Mittels des Multimedia-Dockinggeräts wird im Multimedia-Endgerät von der Ausführung des ersten Anwendungsprogramms auf eine Ausführung des zweiten Anwendungsprogramms umgeschaltet, wobei die Ausführung des ersten Anwendungsprogramms im Vordergrund auf dem Multimedia-Endgerät beendet wird und das zweite Anwendungsprogramm zum Ablaufen auf dem Multimedia-Endgerät im Vordergrund gebracht wird.

Die Erfindung beruht auf der Erkenntnis, dass es zu einem mittels des Multimedia-Dockinggeräts ferngesteuerten Umschalten von einem ersten Anwendungsprogramms auf ein zweitens Anwendungsprogramm, die in dem Multimedia-Endgerät ausgeführt werden, vorteilhaft ist, Daten der Anwendungsprogramme in dem Speicherbereich abzulegen. Weiterhin wurde erkannt, dass es vorteilhaft ist, den Speicherbereich für alle Anwendungsprogramme zugänglich zu machen. Zudem wurde erkannt, dass das Umschalten vereinfacht ist, wenn das jeweils ausführende Anwendungsprogramm die Daten der anderen Anwendungsprogramme in einer Liste speichert. Dadurch kann die Liste mit geringem Aufwand vom Multimedia-Endgerät zu dem Multimedia-Dockinggerät übertragen werden und sie kann dort ebenfalls gespeichert werden. Das Speichern der Liste kann im flüchtigen Arbeitsspeicher des jeweiligen Gerätes erfolgen. Die zu einem Anwendungsprogramm erzeugte Liste mit den Daten der anderen Anwendungsprogramme kann jeweils so lange im Speicher gehalten werden wie das eine Anwendungsprogramm im Vordergrund läuft. Danach kann sie gelöscht werden. Im Multimedia-Dockinggerät kann die Liste vorteilhaft genutzt werden um dem Bediener mit einer überschaubaren Informationsmenge die Auswahl und das Umschalten auf ein anderes Anwendungsprogramm in dem Multimedia-Endgerät zu ermöglichen. Dies ist insbesondere von Vorteil, wenn das Umschalten in einem Fahrzeug durch den Fahrzeugführer erfolgt, weil er durch die einfache Auswahlmöglichkeit und das einfache, bedienerfreundliche Umschalten kaum vom Führen des Fahrzeugs abgelenkt wird. Dies gilt umso mehr je kleiner die Bildschirmfläche und die Bedienungselemente wie z.B. mechanische oder Touch Screen Tasten des Multimedia-Endgeräts sind und je größer bzw. komfortabler im Verhältnis dazu Bedien- und Anzeigeelemente am Multimedia-Dockinggerät sind. Mit der Erfindung kann das Umschalten einschließlich dem Schließen des ersten Anwendungsprogramms und dem Starten des zweiten Anwendungsprogramms zumindest teilweise automatisiert und dadurch wesentlich vereinfacht werden. Zudem können zum Beispiel im Zusammenhang mit einer in einem Kraftfahrzeug fest eingebauten Multimedia-Dockingstation individuell andersartige Anzeige- und/oder Bedienelemente als an dem Multimedia-Endgerät vorgesehen sein, die dem Führen des Fahrzeugs angepasst sind. Beispielsweise können Anzeigeelemente wie ein großer Bildschirm und/oder angepasste Bedienelemente wie zum Beispiel Bedienräder (Scrollräder) oder im Nahbereich des Lenkrads oder direkt am Lenkrad angebrachte Tasten vorgesehen sein. Die Anzeige kann in einer vom Fahrer leicht zu beobachtenden Position erfolgen, beispielsweise im Anzeige-Konsolenbereich des Fahrzeugs bei einer Multimedia- und Navigationsanzeigefläche. Das Multimedia-Endgerät kann dann beispielsweis unsichtbar in einer Armlehnen-Konsole im Fahrzeug verstaut werden, weil der Fahrzeugführer es nicht bedienen muss. Die Auswahl der Anwendungsprogramme kann beispielsweise dadurch vereinfacht werden, dass im Fahrzeug lediglich ausgewählte oder verkürzte Daten bzw. Informationen zu den Anwendungsprogrammen, insbesondere Daten des anwendungsspezifischen Datensatzes in einer Auswahlliste, angezeigt werden. Durch solche fahrzeugspezifischen Anpassungen werden Komfort und Sicherheit beim Führen eines Fahrzeugs weiter erhöht.

Die Erfindung ist insbesondere vorteilhaft in Smartphones anwendbar, auf denen Computerprogramme im Vordergrund bzw. im Hintergrund wie beschrieben ablaufen können. Eine solche Betriebsweise kann beispielsweise erfolgen, wenn ein Multimedia-Endgerät mit dem Betriebssystem iOS (iPhone OS) der Firma Apple Inc. gesteuert wird. Dabei kann auch vorgesehen sein, dass einem im Vordergrund ablaufenden Anwendungsprogramm während seiner Aktivierung vorrangig Rechenzeit auf einem Mikroprozessor zugewiesen wird, während Programmen, die im Hintergrund aktiviert sind, Rechenzeit nur relativ begrenzt bzw. nachrangig zugewiesen wird.

In einem vorteilhaften Ausführungsbeispiel der Erfindung umfasst der anwendungsspezifische Datensatz der Anwendungsprogramme jeweils zumindest eine Identifikation der Anwendung, eine Zieladresse, unter der das jeweilige Anwendungsprogramm im Multimedia-Endgerät aufrufbar ist sowie eine Signatur. Die Identifikation kann beispielsweise ein Name der Anwendung sein. Die Zieladresse kann beispielsweise eine Uniform Resource Locator (URL) Adresse sein, insbesondere eine Adresse innerhalb des Multimedia-Endgeräts. Die Signatur der Anwendung kann insbesondere für eine Überprüfung des Datensatzes bzw. der darin enthaltenen Nutzdaten wie z.B. des Namens und der URL vorgesehen sein. Dazu kann im Multimedia-Endgerät eine Steuerung mit einem Computerprogramm-Modul vorgesehen sein, die die Signatur prüft, bevor das Anwendungsprogramm am Multimedia Dockinggerät angezeigt werden kann. Der anwendungsspezifische Datensatz kann weitere Daten wie zum Beispiel ein grafisches Symbol des Anwendungsprogramms umfassen.

In einem weiteren bevorzugten Ausführungsbeispiel der Erfindung wird von der ersten Anwendung zu den anwendungsspezifischen Datensätzen der weiteren Anwendungsprogramme der Gruppe jeweils eine Prüfung von deren Signatur veranlasst und die jeweiligen Anwendungsprogramme nur bei Bestehen der Signaturprüfung in die Liste aufgenommen. Mit diesen Maßnahmen kann eine integrierte Signaturprüfung derart erfolgen, dass in der Liste nur diejenigen Anwendungsprogramme geführt werden, deren Signatur der Nutzdaten des Datensatzes unverändert und gültig ist und die für die Auswahl auf dem Multimedia-Dockinggerät autorisiert sind. Auch dies trägt dazu bei, dass der Umfang der Liste beschränkt ist, nämlich auf diejenigen Anwendungsprogramme, die eine gültige Signatur aufweisen. Dem entsprechend werden nur diese Anwendungsprogramme in dem Multimedia-Dockinggerät zur Auswahl angeboten. Dadurch kann zudem verhindert werden, dass dem Fahrzeugführer Anwendungsprogramme angeboten werden, die ohne dessen Willen auf dem Multimedia-Endgerät automatisch gespeichert wurden, so genannte SPAM-Anwendungsprogramme. Anwendungsprogramme im Sinne der vorliegenden Erfindung sind insbesondere auf eine Anwendung gerichtete Computerprogramme.

Im Folgenden werden weitere Ausführungsbeispiele der Erfindung anhand von Figuren näher erläutert. Es zeigen:
Figur 1 ein Gerätesystem und
Figur 2 ein Ablaufdiagramm.

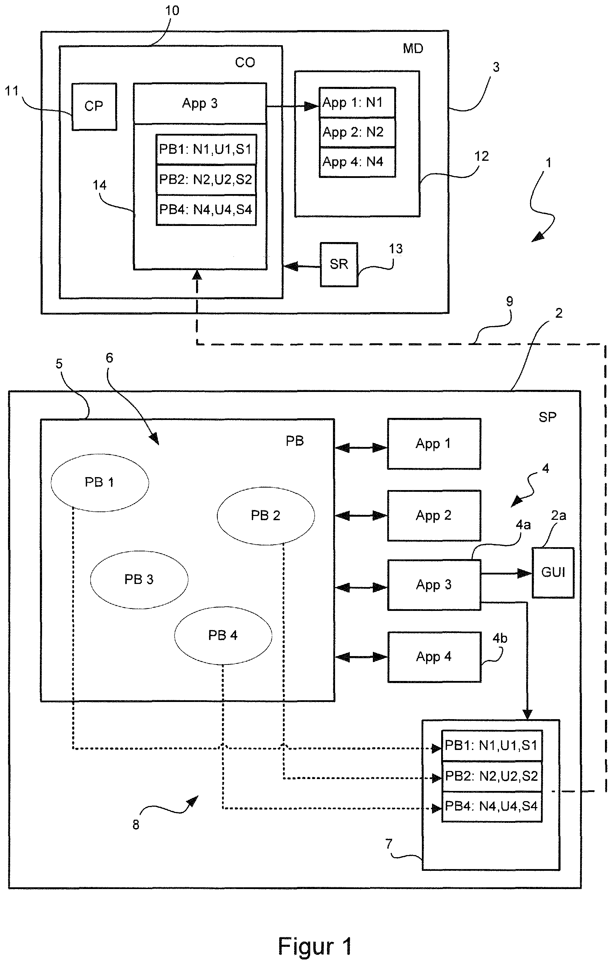

In dem in Figur 1 dargestellten Gerätesystem 1 ist ein Smartphone 2 mit einem Fahrzeug-Infotainmentsystem 3 verbunden. Beide werden jeweils von einem Mikroprozessor gesteuert und sind in der Lage, Multimediainhalte wiederzugeben. Das Fahrzeug-Infotainmentsystem 3 ist in einem Kraftfahrzeug fest eingebaut und kann zudem Fahrzeuginformationen wie die Fahrzeuggeschwindigkeit, Fahrzeugpositionsdaten einschließlich einer Navigationskarte usw. darstellen. Es kann auch weitere Multimedia-Geräte wie z.B. einen Rundfunkempfänger, einen CD/DVD-Spieler usw. enthalten. In dem Smartphone 2 sind Anwendungsprogramme 4 beispielsweise in einem nicht flüchtigen Speicher gespeichert und dadurch zur Ausführung bereit gestellt. Sie können im Rahmen des gesamten Programmablaufs bzw. der Steuerung des Smartphones 2 im Vordergrund oder im Hintergrund ausgeführt werden. Von den Anwendungsprogrammen 4 wird jeweils nur ein Anwendungsprogramm zu einem Zeitpunkt im Vordergrund ausgeführt. Im Hintergrund können dagegen mehrere der Anwendungsprogramme 4 gleichzeitig ablaufen. Für den gesamten Programmablauf wird jeweils in an sich bekannter Weise ein flüchtiger Arbeitsspeicher (RAM) des Smartphones 2 benutzt.

Alle vier Anwendungsprogramme 4, nämlich App1, App2, App3 und App4, erstellen im Zuge ihrer Ausführung in einem Speicherbereich 5 (Pasteboard, PB) anwendungsspezifische Datensätze 6 (Pasteboards, PBi, i=1 ...4), in denen sie jeweils ihren Namen (Ni), eine URL (Ui) Adresse mit einem so genannten URL Scheme, unter denen sie im Smartphone 2 aufrufbar sind, sowie eine jeweilige Signatur der Nutzdaten des Datensatzes (Si) abspeichern. Die Signaturen dienen dazu, sicherzustellen, dass die Inhalte der Datensätze nicht verändert wurden oder von unberechtigten SPAM-Apps erstellt wurden.

In dem in Figur 1 dargestellten Beispiel wird gerade Anwendungsprogramm 4a "App3" im Vordergrund ausgeführt, das Daten über die grafische Benutzerschnittstelle (Graphical User Interface, GUI) 2a des Smartphones 2 ausgibt und mit dem Fahrzeug-Infotainmentsystem 3 kommunizieren kann. Auf dem Smartphone 2 können im Hintergrund eines oder mehrere der übrigen Anwendungsprogramme 4 ablaufen.

Das Anwendungsprogramm 4a "App3" erstellt über die Datenpfade 8 eine Liste 7, in der es zu den anderen Anwendungsprogrammen 4 jeweils die Daten von deren anwendungsspezifischen Datensätzen 6 einträgt (Ni, Ui, Si). Dazu werden die anwendungsspezifischen Pasteboards PBi aller anderen Anwendungsprogramme 4 nach dem vorgegebenen Datenmuster (Ni, Ui, Si) lokalisiert und deren Signatur geprüft. Damit werden diejenigen Anwendungsprogramme 4, die ebenfalls kompatibel zu dem Fahrzeug-Infotainmentsystem 3 sind, im Smartphone 2 lokalisiert und ausgewählt.

Über Datenpfad 9 überträgt das Anwendungsprogramm 4a "App3" den Inhalt der Liste 7 in einen Controller 10 des Fahrzeug-Infotainmentsystems 3. Ein darin gespeichertes Computerprogramm 11 wird ausgeführt und steuert eine grafische Benutzerschnittstelle (GUI) 12 an. Es verarbeitet auch Benutzereingaben, die über ein Scrollrad 13 erfolgen. Eingaben können auch über grafische Elemente erfolgen, wenn die Benutzerschnittstelle 12 ein Touch Screen ist. Der Controller 10 bzw. das darin ablaufende Computerprogramm 11 verarbeitet die Informationen der Liste 7 der Anwendung 4A "App 3". Wenn über das Scrollrad 13 eine Anforderung eingeht, auf eine andere Anwendung umzuschalten, dann stellt das Computerprogramm 11 von den Daten der anderen Anwendungsprogramme 4 jeweils deren Namen in einer Liste 14 auf der grafischen Benutzerschnittstelle 12 dar. Wenn eine dieser Anwendungen App 1, App 2 oder App 4 ausgewählt wird, beispielsweise die "App 4" mit dem Namen (N4) "Facebook", dann veranlasst Computerprogramm 11 über die in Liste 7 gespeicherten URL-Informationen im Smartphone 2 das Beenden der aktiven Anwendung 4a "App3" im Vordergrund und das anschließende Öffnen der entsprechenden neuen Anwendung 4b "App4", z.B. "Facebook" im Vordergrund über deren URL "fb://friends". Die Anwendung 4b kann dabei bereits vorher im Hintergrund abgelaufen sein und lediglich in den Vordergrund gebracht werden oder ganz neu im Vordergrund gestartet werden. Die Anwendung 4a kann entweder ganz beendet werden oder lediglich von Vordergrund in den Hintergrund gebracht werden. Das Verbringen einer Anwendung in den Vordergrund bzw. Hintergrund kann durch eine entsprechende übergeordnete Programmsteuerung und beispielsweise anhand eines der jeweiligen Anwendung zugeordneten Parameters erfolgen.

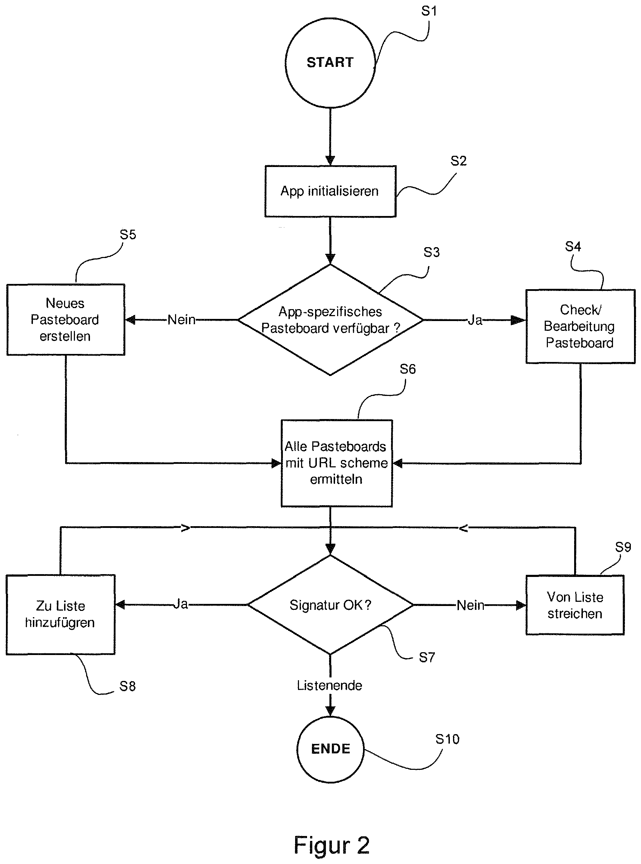

In Figur 2 ist das Verfahren, mit dem das Anwendungsprogramm 4a "App3" die Liste 7 erstellt, in einem Ablaufdiagramm dargestellt. Im Schritt 1 startet das Verfahren, im Schritt S2 wird das Anwendungsprogramm 4a initialisiert. Im Schritt S3 wird überprüft, ob für das Anwendungsprogramm 4a bereits ein anwendungsspezifisches Pasteboard verfügbar ist. Gegebenenfalls wird das Pasteboard im Schritt S4 überprüft und nötigenfalls bearbeitet. Falls die Prüfung im Schritt S3 negativ verläuft, wird für das Anwendungsprogramm 4a im Schritt S5 ein neues anwendungsspezifisches Pasteboard erstellt. Nach dem Schritt S4 bzw. S5 werden im Schritt S6 sämtliche im Pasteboard-Speicher 5 verfügbaren anwendungsspezifischen Pasteboards und deren individuelle Datensätze einschließlich deren URLs ermittelt. In einer Schleife für alle anwendungsspezifischen Pasteboards wird mit Schritt S7 überprüft, ob deren Signatur gültig ist. Gegebenenfalls werden die jeweiligen anwendungsspezifischen Daten im Schritt S8 der Liste 7 hinzugefügt. Wenn Schritt S7 ergibt, dass für ein Anwendungsprogramm die Signatur des Datensatzes nicht gültig ist, dann wird das jeweilige Anwendungsprogramm mit seinen Daten im Schritt S9 in Liste 7 nicht aufgenommen bzw. von Liste 7 gestrichen und der Datensatz (Pasteboard) im globalen Speicherbereich gelöscht. Andere anwendungsspezifische Pasteboard-Daten, die in einer bestehenden Liste 7 enthalten sind und deren Anwendungsprogramme die Signaturbedingungen erfüllen, bleiben auch nach dem Beenden des jeweiligen Anwendungsprogramms im entsprechenden Speicherbereich des Speichers 5 enthalten. Nach dem Durchlaufen aller Anwendungsprogramme bzw. am Listenende wird der Ablauf im Schritt S10 beendet.

Die beschriebenen Geräte und Systemkomponenten werden insbesondere mit Computerprogrammen gesteuert und können dazu weitere, an sich bekannte Elemente von Computern und digitalen Steuerungseinrichtungen wie einen Mikroprozessor, flüchtige und nicht flüchtige Speicher, Schnittstellen usw. aufweisen. Die Erfindung kann deshalb auch ganz oder teilweise in Form eines Computerprogrammprodukts realisiert werden, das beim Laden und Ausführen auf einem Computer einen erfindungsgemäßen Ablauf ganz oder teilweise bewirkt. Es kann beispielsweise in Form eines Datenträgers wie einer CD/DVD bereitgestellt werden oder auch in Form einer Datei oder mehrerer Dateien auf einem Server, von dem das Computerprogramm herunter ladbar ist.

## Patentansprüche

1. Verfahren zum Umschalten von Anwendungsprogrammen (4) in einem prozessorgesteuerten Multimedia-Endgerät (2), das mit einem in einem Kraftfahrzeug fest eingebauten prozessorgesteuerten Fahrzeug-Infotainmentsystem (3) über einen Datenpfad (9) verbunden ist, wobei das Fahrzeug-Infotainmentsystem (3) eine grafische Benutzerschnittstelle (12) umfasst, wobei
- eine Gruppe mehrerer Anwendungsprogramme (4) auf dem Multimedia-Endgerät (2) gespeichert und zur Ausführung bereit gestellt wird,
- die Anwendungsprogramme (4) auf dem Multimedia-Endgerät (2) im Vordergrund oder im Hintergrund ablaufen können,
- ein Anwendungsprogramm (4a) beim Ablaufen im Vordergrund Daten über eine grafische Benutzeroberfläche (2a, 12) ausgeben kann,
- im Vordergrund zu einem Zeitpunkt jeweils nur ein Anwendungsprogramm (4a) aus der Gruppe ausgeführt wird,
- beim Ablaufen im Hintergrund ein Anwendungsprogramm (4a) keine Daten über die grafische Benutzeroberfläche ausgeben kann,
- in dem Multimedia-Endgerät (2) ein Speicherbereich (5) vorgesehen ist, auf den die Anwendungsprogramme (4) während ihrer Ausführung Lese- und Schreibzugriff haben,
- zu den Anwendungsprogrammen (4) jeweils ein anwendungsspezifischer Datensatz (6) in dem Speicherbereich (5) gespeichert wird, der auch nach dem Beenden des jeweiligen Anwendungsprogramms in dem Speicherbereich erhalten bleibt,
- ein erstes Anwendungsprogramm (4a) während seiner Ausführung in dem Multimedia-Endgerät (2) die anwendungsspezifischen Datensätze (6) der anderen Anwendungsprogramme der Gruppe (4) liest und in einer Liste (7) speichert,
- die Liste (7) über den Datenpfad (9) an das Fahrzeug-Infotainmentsystem (3) übertragen wird,
- auf der grafischen Benutzerschnittstelle (12) des Fahrzeug-Infotainmentsystems (3) Daten zu den in der Liste (7, 14) enthaltenen Anwendungsprogrammen (4) angezeigt werden,
- aus der Liste (7, 14) ein Anwendungsprogramm als zweites Anwendungsprogramm (4b) ausgewählt wird und
- mittels des Fahrzeug-Infotainmentsystems (3) im Multimedia-Endgerät (2) von der Ausführung des ersten Anwendungsprogramms (4a) auf eine Ausführung des zweiten Anwendungsprogramms (4b) umgeschaltet wird, wobei die Ausführung des ersten Anwendungsprogramms (4a) im Vordergrund auf dem Multimedia-Endgerät (2) beendet wird und das zweite Anwendungsprogramm (4b) auf dem Multimedia-Endgerät (2) zum Ablaufen im Vordergrund gebracht wird.

2. Verfahren nach Anspruch 1, wobei der anwendungsspezifische Datensatz (6) der Anwendungsprogramme (4) jeweils zumindest umfasst:
- eine Identifikation (Ni) des Anwendungsprogramms (4, 4a, 4b),
- eine Zieladresse (Ui), unter der das jeweilige Anwendungsprogramm (4, 4a, 4b) aufrufbar ist und
- eine Signatur (Si) für Nutzdaten (Ni, Ui) des Datensatzes (6).

3. Verfahren nach Anspruch 2, wobei von dem ersten Anwendungsprogramm (4a) zu den anwendungsspezifischen Datensätzen (6) der weiteren Anwendungsprogramme (4, 4b) jeweils eine Prüfung der Signatur veranlasst wird und die jeweiligen Anwendungsprogramme (4, 4b) nur bei Bestehen der Signaturprüfung in die Liste (7, 14) aufgenommen werden.

4. Verfahren nach Anspruch 2 oder 3, wobei die Zieladresse (Ui) eine Uniform Resource Locator- (URL-) Adresse ist.

5. Computerprogramm-Produkt, umfassend Befehle, die beim Laden und Ausführen auf einem computergesteuerten Gerätesystem dieses veranlassen, ein Verfahren nach einem der vorhergehenden Ansprüche auszuführen.

6. Gerätesystem umfassend ein Multimedia-Endgerät (2) und/oder ein Fahrzeug-Infotainmentsystem (3) und ein Computerprogrammprodukt nach Anspruch 5, das Gerätesystem umfassend Mittel zur Ausführung der Befehle.

7. Fahrzeug umfassend ein Gerätesystem nach Anspruch 6, wobei das Multimedia-Endgerät (2) ein Mobilfunktelefon mit Multimediafunktion ist und wobei das Fahrzeug-Infotainmentsystem (3) in dem Fahrzeug eingebaut ist.

## Claims

1. A method for switching application programs (4) in a processor-controlled multimedia terminal device (2), which is connected via a data path (9) to a processor-controlled vehicle infotainment system (3) fixedly installed in a motor vehicle, wherein the vehicle infotainment system (3) comprises a graphic user interface (12), wherein
- a group comprising a plurality of application programs (4) is stored on the multimedia terminal device (2) and is provided for execution,
- the application programs (4) can run on the multimedia terminal device (2) in the foreground or in the background,
- an application program (4a), when running in the foreground, can output data via a graphic user surface (2a, 12),
- at any point in time only one application program (4a) from the group is executed in the foreground,
- an application program (4a) cannot output any data via the graphic user surface when running in the background,
- a storage region (5) is provided in the multimedia terminal device (2), to which the application programs (4) have read and write access during execution thereof,
- an application-specific data set (6) is stored in the storage region (5) for each of the application programs (4) and is also maintained in the storage region once the relevant application program has ended,
- a first application program (4a) reads the application-specific data sets (6) of the other application programs of the group (4) and stores them in a list (7) during execution of the first application program in the multimedia terminal device (2),
- the list (7) is transferred to the vehicle infotainment system (3) via the data path (9),
- data relating to the application programs (4) contained in the list (7, 14) are displayed on the graphic user interface (12) of the vehicle infotainment system (3),
- an application program from the list (7, 14) is selected as second application program (4b) and
- by means of the vehicle infotainment system (3) a switch is made, in the multimedia terminal device (2), from the execution of the first application program (4a) to an execution of the second application program (4b), wherein the execution of the first application program (4a) in the foreground on the multimedia terminal device (2) is ended and the second application program (4b) is caused to run in the foreground on the multimedia terminal device (2).

2. A method according to claim 1, wherein the application-specific data sets (6) of the application programs (4) each at least comprise:
- an identification (Ni) of the application program (4, 4a, 4b),
- a target address (Ui), under which the relevant application program (4, 4a, 4b) is retrievable, and
- a signature (Si) for useful data (Ni, Ui) of the data set (6).

3. A method according to claim 2, wherein a check of the signature is prompted in each case by the first application program (4a) for the application-specific data sets (6) of the further application programs (4, 4b), and the respective application programs (4, 4b) are only incorporated in the list (7, 14) if the signature check is passed.

4. A method according to claim 2 or 3, wherein the target address (Ui) is a uniform resource locator (URL) address.

5. A computer program product, comprising commands which, when loaded and executed on a computer-controlled device system, prompt this to execute a method according to any one of the preceding claims.

6. A device system comprising a multimedia terminal device (2) and/or a vehicle infotainment system (3) and a computer program product according to claim 5, the device system comprising means for executing the commands.

7. A vehicle comprising a device system according to claim 6, wherein the multimedia terminal device (2) is a mobile telephone with multimedia function, and wherein the vehicle infotainment system (3) is installed in the vehicle.

## Revendications

1. Procédé de commutation de programmes d'application (4) dans un terminal multimédia (2) commandé par ordinateur qui est relié par l'intermédiaire d'un chemin de données (9) à un système d'information divertissement (3) commandé par ordinateur monté solidairement dans un véhicule, le système d'information divertissement du véhicule (3) comprenant une interface d'utilisateur graphique (12), selon lequel
- un groupe de plusieurs programmes d'application (4) est enregistré sur le terminal multimédia (2) et est mis à disposition pour son exécution,
- les programmes d'application (4) peuvent se dérouler sur le terminal multimédia (2) au premier-plan ou en arrière-plan,
- lors de son déroulement au premier-plan un programme d'application (4a) peut délivrer des données sur une surface d'utilisateur graphique (2a, 12),
- à un instant, seul un programme d'application (4a) du groupe est exécuté au premier-plan,
- lors de son déroulement en arrière-plan, un programme d'application (4a) ne peut pas délivrer de données sur la surface d'utilisateur graphique,
- dans le terminal multimédia (2) il est prévu une zone de mémoire (5) à laquelle les programmes d'application (4) ont des accès en lecture et en écriture pendant leurs exécutions,
- pour les programmes d'application (4) est respectivement stocké dans la zone de mémoire (5), un jeu de données (6) spécifiques à l'application qui également après l'achèvement du programme d'application respectif reste contenu dans la zone de mémoire,
- pendant son exécution dans le terminal multimédia (2), un premier programme d'application (4a) lit, les jeux de données (6) spécifiques à l'application des autres programmes d'application du groupe (4) et les enregistre dans une liste (7),
- la liste (7) est transmise par le chemin de données (9) au système d'information divertissement (3) du véhicule,
- sur l'interface d'utilisateur graphique (12) du système d'information divertissement du véhicule (3), des données concernant les programmes d'application (4) contenues dans la liste (7, 14) sont affichées,
- un programme d'application est choisi dans la liste (7, 14) en tant que second programme d'application (4b), et
- au moyen du système d'information divertissement (3) du véhicule, on peut effectuer dans le terminal multimédia (2) une commutation entre l'exécution du premier programme d'application (4a) et une exécution du second programme d'application (4b), l'exécution du premier programme d'application (4a) au premier-plan sur le terminal multimédia (2) étant achevé, et le second programme d'application (4b) étant installé sur le terminal multimédia (2) pour permettre son déroulement au premier-plan.

2. Procédé conforme à la revendication 1,
selon lequel le jeu de données (6) spécifique à l'application du programme d'application (4) renferme respectivement au moins :
- une identification (Ni) du programme d'application (4, 4a, 4b),
- une adresse de destination (Ui), sous laquelle peut être appelé le programme d'application respectif (4, 4a, 4b), et
- une signature (Si) pour des données utiles (Ni, Ui) du jeu de données (6).

3. Procédé conforme à la revendication 2,
selon lequel le premier programme d'application (4a), effectue respectivement un contrôle de la signature du jeu de données (6) spécifique à l'application de l'autre programme d'application (4, 4b), et les programmes d'application respectifs (4, 4b) ne sont pris dans la liste (7, 14) que lors du passage contrôle de la signature.

4. Procédé conforme à la revendication 2 ou 3,
selon lequel l'adresse de destination (Ui) est une adresse (URL) (Uniforme Resource Locator).

5. Produit programme d'ordinateur comprenant des instructions qui, lorsqu'elles sont chargées et exécutées sur un système d'appareil commandé par ordinateur permettant à celui-ci de mettre en oeuvre un procédé conforme à l'une des revendications précédentes.

6. Système d'appareil comprenant un terminal multimédia (2) et/ou un système d'information divertissement de véhicule (3) et un produit programme d'ordinateur conforme à la revendication 5, le système d'appareil comprenant des moyens permettant l'exécution des ordres.

7. Véhicule comprenant un système d'appareil conforme à la revendication 6,
dans lequel le terminal multimédia (2) est un téléphone mobile ayant des fonctions multimédia et le système d'information divertissement du véhicule (3) est monté dans le véhicule.
